## Europäisches Patentamt

## European Patent Office

## Office européen des brevets

(11) Veröffentlichungsnummer: **0 048 971**
**B1**

(12) # EUROPÄISCHE PATENTSCHRIFT

(45) Veröffentlichungstag der Patentschrift:
23.01.85

(51) Int. Cl.⁴: **G 06 F 9/22**

(21) Anmeldenummer: **81107624.9**

(22) Anmeldetag: **24.09.81**

(54) **Schaltungsanordnung zur Ausführung von Mikrobefehlen mit unterschiedlich langen Ausführungszeiten.**

(30) Priorität: **30.09.80 DE 3036849**

(43) Veröffentlichungstag der Anmeldung:
**07.04.82 Patentblatt 82/14**

(45) Bekanntmachung des Hinweises auf die Patenterteilung:
**23.01.85 Patentblatt 85/4**

(84) Benannte Vertragsstaaten:
**AT BE CH FR GB IT LI NL SE**

(56) Entgegenhaltungen:
**DE - B - 2 206 810**
**US - A - 4 140 872**

**COMPUTER DESIGN, Band 18, Nr. 10, Oktober 1979, CONCORD (US) H. BRINEEN: "Variable microcycles improve speed of bipolar bit slice processors", Seiten 168-174**

(73) Patentinhaber: **COMPUTER GESELLSCHAFT KONSTANZ MBH, Max-Stromeyer-Strasse 116, D-7750 Konstanz (DE)**

(72) Erfinder: **Voigt, Heinz, Paul-Gerhardt-Weg 9, D-7750 Konstanz (DE)**

(74) Vertreter: **Mehl, Ernst, Dipl.-Ing. et al, Postfach 22 01 76, D-8000 München 22 (DE)**

BUNDESDRUCKEREI BERLIN

## Beschreibung

Die Erfindung bezieht sich auf eine Schaltungsanordnung nach dem Oberbegriff des Patentanspruchs 1.

Es sind Datenverarbeitungsanlagen bekannt, bei denen für die Ausführung verschiedener Mikrobefehle, d. h. für verschieden lang dauernde Elementaroperationen, eine stets gleich große Zeitspanne vorgegeben wird. Feste Zeitvorgabe bedeutet aber, daß die Dauer der Zeitspanne durch die jeweils langsamste Elementaroperation bestimmt wird. Da jedoch die meisten Elementaroperationen kürzer, oft sogar sehr viel kürzer sind, geht durch diese Betriebsweise sehr viel Zeit verloren.

Bei einer anderen bekannten Lösung ist für jede Art von Mikrobefehlen eine eigene Zeitschaltkette vorgesehen. Diese Maßnahme ist schaltungstechnisch sehr aufwendig und darüber hinaus nicht fein genug abstimmbar, da in Anbetracht der Vielfalt der Mikrobefehle nur eine Grobunterteilung in wenige Gruppen mit entsprechend zugeordnetem Taktraster möglich ist. Schrittweise Verbesserungen und Optimierungen während der Entwicklungsphase sind hier nur bei entsprechender Änderung der Hardware möglich.

Schließlich ist aus der DE-B-2 206 810 ein Steuerwerk für einen Mikroprogrammspeicher unter Verwendung einer Verzögerungsschaltung bekannt, bei dem die Abgriffe der Verzögerungsschaltung, die jeweils verschiedenen Mikrobefehls-Ausführungszeiten zugeordnet sind, durch je eine im Mikrobefehl enthaltene Bitkombination angesteuert werden. Auch hier ist eine Modifizierung der Schaltung im Falle einer steigenden Anzahl von Mikrobefehlen mit unterschiedlichen Ausführungszeiten nur bei entsprechender Änderung der Hardware, insbesondere der Verzögerungsschaltung, möglich.

Der vorliegenden Erfindung liegt nun die Aufgabe zugrunde, eine Schaltungsanordnung zur Ausführung von Mikrobefehlen mit unterschiedlich langen Ausführungszeiten in der Weise auszubilden, daß sie möglichst einfach und ohne größere Änderung der Hardware an die jeweils in Betracht kommende Mikroprogrammsteuerung angepaßt werden kann.

Die Lösung dieser Aufgabe ergibt sich erfindungsgemäß durch die kennzeichnenden Merkmale des Patentanspruchs 1.

Für den Fall, daß der die Mikrobefehle verarbeitende Prozessor sowohl in einem Normalzustand als auch beispielsweise zu Wartungszwecken in einem Sonderzustand betrieben werden soll, ist eine gemäß den Merkmalen des Anspruchs 4 ausgestaltete Weiterbildung der erfindungsgemäßen Schaltungsanordnung mit Vorteil anwendbar.

Weitere vorteilhafte Ausgestaltungen des Erfindungsgedankens sind den übrigen Unteransprüchen entnehmbar.

Im folgenden wird ein Ausführungsbeispiel der Erfindung anhand der Zeichnung näher erläutert. Dabei zeigt

Fig. 1 den prinzipiellen Aufbau eines Prozessors zur Verarbeitung von Mikrobefehlen mit unterschiedlich langen Ausführungszeiten,

Fig. 2 ein Blockschaltbild einer Schaltungsanordnung zur Taktraster-Entschlüsselung gemäß der Erfindung,

Fig. 3 den Zusammenhang zwischen festen Taktraster und Taktraster-Entschlüsselungssignalen.

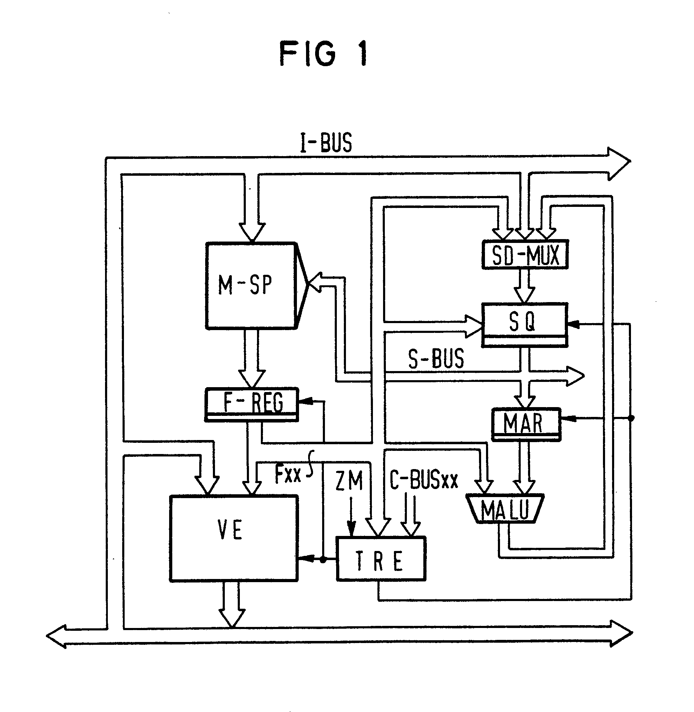

Der in Fig. 1 schematisch dargestellte Prozessor arbeitet mit einem Datenbus I-BUS, der den Datenaustausch zwischen den einzelnen Elementen des Prozessors ermöglicht. Ein vom Datenbus I-BUS unabhängiger Adreß-Datenpfad ist für die Steuerung der Mikrobefehlsfolgen vorgesehen. Hierzu gehört ein sogenannter Sequenzer-Bus S-BUS, über den der Mikrobefehlsspeicher M-SP adressiert wird. Der Mikrobefehlsspeicher M-SP legt seine Daten in ein Mikrobefehlsregister F-REG ab. Das Mikrobefehlsregister F-REG ist mit einer Verarbeitungseinheit VE, einem Sequenzer SQ, einem Datenselektor SD-MUX, einem Mikrobefehls-Rechenwerk MALU und einem Taktraster-Entschlüsseler TRE verbunden. Der Sequenzer SQ dient zur Steuerung der Mikrobefehlsfolge. Dieser Sequenzer SQ ist eingangsseitig mit einem Datenselektor SE-MUX verbunden, der eine Auswahl von Adreßquellen für Sprungbefehle vornimmt. Ausgangsseitig ist ein Mikrobefehls-Adressenregister MAR angeschaltet, das zur Zwischenspeicherung der Ausgangsdaten des Sequenzers SQ dient. Schließlich ist noch ein Mikrobefehls-Rechenwerk MALU vorgesehen, in welchem die Berechnung der Sprungadressen für Relativsprünge stattfindet.

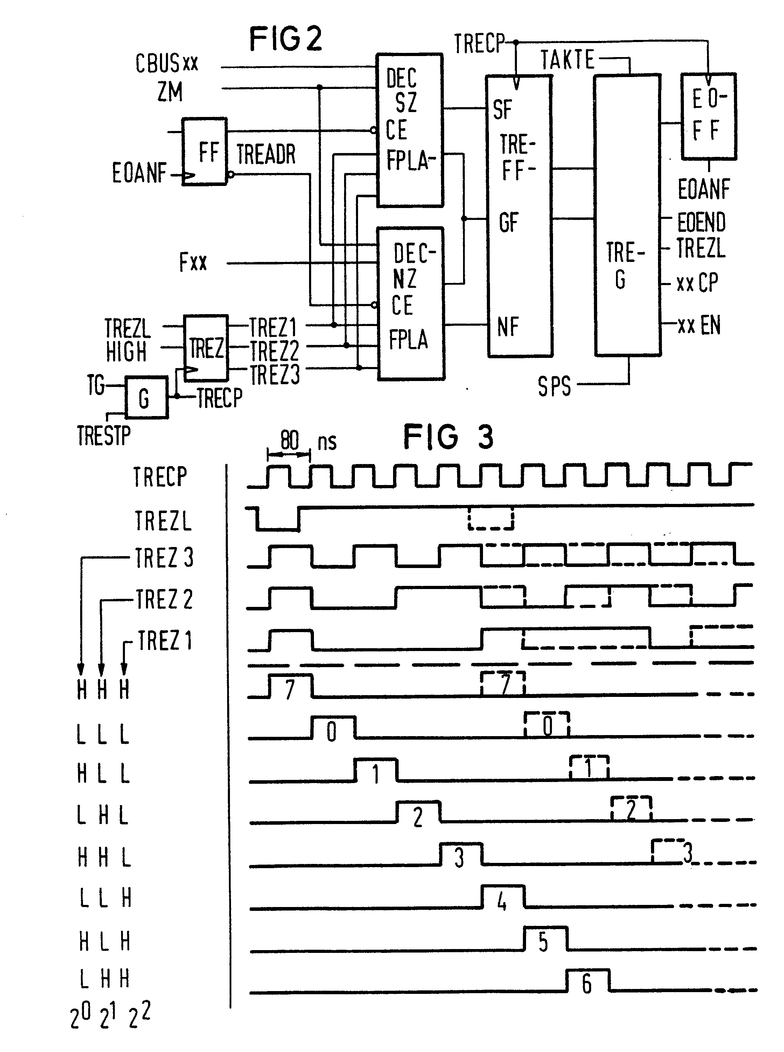

Eine Schaltungsanordnung für einen sogenannten Taktraster-Entschlüsseler ist in Fig. 2 dargestellt. Gesteuert wird diese Schaltung durch einen Zähler TREZ, der mit einem vom Grundtakt abgeleiteten Zählertakt TRECP betrieben wird und der aus drei Ausgangssignalen TREZ1, TREZ2, TREZ3 drei verschiedene Taktsignale liefert, deren Taktfrequenzen sich jeweils im Verhältnis 1 : 2 voneinander unterscheiden. Die drei Zählerausgänge TREZ1, 2, 3 sind mit drei Eingängen einer Decodierstufe DEC-NZ verbunden, die vorzugsweise aus sogenannten freiprogrammierbaren Logikschaltungen FPLA gebildet ist. Eine Logikschaltung FPLA ermöglicht die logische Verknüpfung von z. B. 16 Eingangssignalen in 48 UND-Verknüpfungen und die Abbildung auf 8 Ausgangssignale durch eine ODER-Verknüpfung aus den 48 UND-Verknüpfungen. Die Decodierstufe DEC-NZ kann aus mehreren, über ihre Freigabe-Eingänge CE gegeneinander verriegelbaren Logikschaltungen FPLA bestehen. Die Abarbeitung eines Mirkobefehles erfolgt nun in der Weise, daß am Anfang ein Mikrobefehl aus dem Mikrobefehlsspeicher M-SP in ein Mikrobefehlsregister F-REG eingegeben wird. Aus diesem Mikrobefehlsregister F-REG werden dann die Mikrobefehle entweder direkt oder mit zum Teil vordekodierten Bits sowie Zustandsmeldungen ZM der Decodierstufe DEC-NZ angeboten. Je nach Art des Befehls ergibt sich eine unterschiedlich lange Verarbeitungsdauer, die durch eine entsprechende Verschlüsselung der Eingangssignale Fxx in der Decodierstufe DEC-NZ berücksichtigt wird. Durch die drei höchstwertigen Bits eines Mikrobefehls werden z. B. acht Gruppen des Mikroprogramm-Operationscodes unterschieden. Innerhalb der Gruppen können über gegebenenfalls vorverschlüsselte Signale weitere Klassen unterschieden werden. Zusätzlich wird die Decodierung durch die Ausgangssignale des Zählers gesteuert, wobei die jeweiligen Verknüpfungsergebnisse der Decodierung stets nur bei einem bestimmten Zählerstand erfüllt werden. Dann entstehen an den Ausgängen der Decodierstufe DEC-NZ Freigabesignale.

Der Zusammenhang zwischen den Ausgangssignalen TREZ1, 2, 3 und den zeitvermaßenden Signalen in den Gleichungen der Decodierstufe DEC-NZ ist in Fig. 3 dargestellt. Diese Fig. 3 zeigt im oberen Teil den Betriebstakt TRECP des Zählers TREZ und die an den drei Ausgängen TREZ1, 2, 3 auftretenden Taktsignale, die jeweils im Verhältnis 1 : 2 unterteilt sind. Der Betriebstakt TRECP wird aus dem Grundtakt TG erzeugt und kann abhängig von Zuständen des Prozessors und Ergebnissen des Taktraster-Entschlüsselers mit dem Sperrsignal TRESTP an- und abgeschaltet werden. Im unteren Teil der Fig. 3 sind die aufgrund der verschiedenen Pegelstände — H (HIGH), L (LOW) — sich ergebenden, entsprechend unterschiedlich verzögerten Zeitbereiche dargestellt, zu denen Freigabesignale am Ausgang der Decodierstufe DEC-NZ erzeugt werden können.

Zurückkehrend zu Fig. 2 werden schließlich die Freigabesignale mit dem Betriebstakt TRECP in je einem Flipflop TRE-FF abgespeichert. Die Ausgangssignale der Flipflops TRE-FF stellen z. B. 80 ns lange Fenstersignale dar, aus denen über die Gatter TRE-G, mit exakt vermaßten Takten, die Steuersignale xxCP sowie die Freigabesignale xxEN ausgeblendet werden. Das Startsignal EOANF für eine neue Mikrobefehls-Verarbeitung wird in einem mit dem Betriebstakt TRECP getakteten Flipflop EO-FF nur dann erzeugt, wenn vorher ein Elementaroperation-Endesignal EOEND vorhanden war. Am Ende einer Elementaroperation wird mit dem Signal TREZL der Zähler TREZ normiert. Die Steuersignale können gegebenenfalls durch Sperrsignale SPS unterdrückt werden.

Neben dem Normalzustand kann der Prozessor gemäß Fig. 1 auch in einem Sonderzustand, z. B. für Wartungszwecke oder für eine Unterbrechungssteuerung, betrieben werden. Zu diesem Zweck ist in der Taktraster-Entschlüsselungsschaltung gemäß Fig. 2 eine zweite Decodierstufe DEC-SZ vorgesehen, die bezüglich der Ausgangssignale TREZ1, 2, 3 des Zählers TREZ parallel zur ersten Decodierstufe DEC-NZ geschaltet ist. Die übrigen Eingänge zur zweiten Decodierstufe DEC-SZ sind mit Signalen CBUSxx des Steuerbusses sowie mit Zustands-Meldesignalen ZM beschaltet. Die Betriebsart — Sonderzustand SZ bzw. Normalzustand NZ — wird in einem Flipflop FF gespeichert, dessen komplementäre Ausgänge TREADR jeweils auf die Freigabeeingänge der beiden Decodierstufen DEC-NZ, DEC-SZ wirken. Wenn das Flipflop FF zurückgesetzt ist, wird der Prozessor im Sonderzustand betrieben. Der Zähler TREZ wird jeweils am Ende einer Elementaroperation im Normalzustand, oder durch Steuersignale im Sonderzustand über ein Steuersignal TREZL mit HIGH vorbesetzt, d. h. normiert. Dieses ist in Fig. 3 gestrichelt dargestellt.

Je nach Betriebsart entstehen ferner an den Ausgängen der Decodierstufen DEC-NZ und DEC-SZ zu vorbestimmten Zeiten Freigabesignale, die dem Sonderzustand (SZ), dem Normalzustand (NZ) oder beiden Zuständen (GZ) gemeinsam zugeordnet sind.

## Patentansprüche

1. Schaltungsanordnung zur Ausführung von Mikrobefehlen, die für ihre Funktion unterschiedlich lange Ausführungszeiten beanspruchen, unter Verwendung einer Decodierstufe, die in Abhängigkeit von den jeweiligen Mikrobefehlen unterschiedlich verzögerte Freigabesignale liefert, dadurch gekennzeichnet, daß ein Taktzähler (TREZ) vorgesehen ist, der ausgangsseitig mehrere, aus einem Betriebstakt (TRECP) abgeleitete Taktsignale (TREZ1, 2, 3 . . . ) unterschiedlicher Frequenz liefert, die jeweils im Verhältnis 1 : 2 : 4 . . . unterteilt sind, daß die jeweils ein Taktsignal liefernden n Ausgänge des Taktzählers (TREZ) mit je einem Eingang der aus programmierbaren Logikschaltungen (FPLA) gebildeten Decodierstufe (DEC-NZ) verbunden sind, daß die übrigen Eingänge der Decodierstufe mit vom Mikrobefehl abgeleiteten Signalen beschaltbar sind und die Decodierstufe aus diesen Signalen ein dem jeweiligen Mikrobefehl insbesondere auch hinsichtlich seiner jeweiligen Ausführungszeit entsprechendes, verzögertes Freigabesignal erzeugt und daß die Decodierstufe (DEC-NZ) $2^n$ Ausgänge aufweist, die jeweils mit Flipflops (TRE-FF) verbunden sind, in denen die Freigabesignale speicherbar sind und an deren Ausgängen entsprechend zugeordnete, der Mikrobefehlsausführung dienende Fenstersignale auftreten.

2. Schaltungsanordnung nach Anspruch 1, dadurch gekennzeichnet, daß die Flipflops (TRE-FF) mit Gattern (TRE-G) verbunden sind, an deren Ausgängen den einzelnen Mikrobefehlscodes zugeordnete taktsynchrone Steuersignale auftreten.

3. Schaltungsanordnung nach Anspruch 2, dadurch gekennzeichnet, daß die Gatter (TRE-G) jeweils Sperrsignal-Eingänge aufweisen, über die Sperrsignale zur Unterdrückung einzelner Steuersignale zuführbar sind.

4. Schaltungsanordnung nach einem der vorhergehenden Ansprüche, dadurch gekennzeichnet, daß eine zweite Decodierstufe (DEC-SZ) vorgesehen ist, die eingangsseitig bezüglich der Taktsignale (TREZ1, 2, 3 . . .) des Taktzählers (TREZ) parallel zur ersten Decodierstufe (DEC-NZ) geschaltet ist und die in Abhängigkeit von einer Zustandsmeldung (ZM) anstelle der ersten Decodierstufe (DEC-NZ) in den Signalweg einschaltbar ist und daß die Freigabe-Eingänge (CE) der beiden Decodierstufen mit den komplementären Ausgängen (TREADR) eines die Betriebsart (Normalzustand NZ, Sonderzustand SZ) des die Befehle verarbeitenden Prozessors steuernden Flipflops (FF) verbunden sind.

## Claims

1. A circuit arrangement for the execution of microinstructions which for their function require execution times of different lengths, using a decoder stage which in dependence upon the micro-instructions in question supplies release signals subject to different delays, characterised in that a clock pulse counter (TREZ) is provided which at its output supplies a plurality of clock pulse signals (TREZ1, 2, 3 . . .) of different frequency which are derived from an operating clock pulse train (TRECP) and which are in each case subdivided in the ratio 1 : 2 : 4 . . ., that the n outputs of the clock pulse counter (TREZ), which each supply a clock pulse signal, are each connected to an input of the decoder stage (DEC-NZ) which comprises programmable logic circuits (FPLA), that the other inputs of the decoder stage can be supplied with signals derived from the micro-instruction and from these signals the decoder stage generates a delayed release signal which corresponds to the micro-instruction in question, in particular in respect of its particular execution time, and that the decoder stage (DEC-NZ) has $2^n$ outputs each of which are connected to flip-flops (TRE-FF) in which the release signals can be stored and at whose outputs there occur correspondingly assigned window signals which serve for the execution of the micro-instructions.

2. A circuit arrangement as claimed in claim 1, characterised in that the flip-flops (TRE-FF) are connected to gates (TRE-G) at whose outputs there occur clock-pulse-synchronous control signals which are assigned to the individual microinstruction codes.

3. A circuit arrangement as claimed in claim 2, characterised in that the gates (TRE-G) each have blocking-signal-inputs across which blocking signals can be supplied for the suppression of individual control signals.

4. A circuit arrangement as claimed in one of the preceding claims, characterised in that a second decoder stage (DEC-SZ) is provided which at its input end is connected parallel with the first decoder stage (DEC-NZ) in respect of the clock pulse signals (TREZ1, 2, 3 . . .) of the clock pulse counter (TREZ), and which in dependence upon a status report (ZM) can be connected into the signal path in place of the first decoder stage (DEC-NZ), and that the release inputs (CE) of the two decoder stages are connected to the complementary outputs (TREADR) of a flip-flop (FF) which controls the mode of operation (normal state NZ, special state SZ) of the processor which processes the instructions.

## Revendications

1. Circuit pour l'exécution de micro-instructions nécessitant pour leur fonction des durées d'exécution de longueurs différentes, avec mise en oeuvre d'un étage de décodage qui fournit, en fonction des micro-instructions respectives des signaux de libération retardés différemment, caractérisé par le fait qu'il est prévu un compteur de cadence (TREZ) qui fournit, du côté sortie des signaux de cadence (TREZ1, 2, 3 . . .) qui sont dérivés à partir d'une cadence de fonctionnement (TRECP) et qui sont respectivement subdivisés dans la rapport 1 : 2 : 4 . . ., que les n sorties du compteur de cadence (TREZ) qui fournissent respectivement un signal sont reliées respectivement à une sortie de létage de décodage (DEC-NZ) qui est formé par des circuits logiques (FPLA) programmables, que les autres entrées de l'étage de décodage sont susceptibles de recevoir des signaux qui sont dérivés de la micro-instruction, alors que l'étage de décodage produit à partir de ces signaux un signal de libération retardé qui correspond à la micro-instruction correspondante, en particulier également du point de vue de sa durée d'exécution correspondante, et que l'étage de décodage (DEC-NZ) possède $2^n$ sorties respectivement reliées à des multivibrateurs bistabiles (TRE-FF) dans lesquels les signaux de libération sont susceptibles d'être mémorisés et au niveau des sorties desquels apparaissent avec une coordination correspondante des signaux de fenêtres qui servent à l'exécution des micro-instructions.

2. Circuit selon la revendication 1, caractérisé par le fait que les multivibrateurs bistabiles (TRE-FF) sont reliés à des portes (TRE-G) aux sorties desquelles apparaissent, avec synchronisation du point de vue de la cadence, des signaux de commande associés aux différents codes des micro-instructions.

3. Circuit selon la revendication 2, caractérisé par le fait que les portes (TRE-G) présentent chacune des entrées de signaux de blocage par l'intermédiaire desquelles sont susceptibles d'être appliqués des signaux de blocage pour supprimer différents signaux de commande.

4. Circuit selon l'une des revendications précédentes, caractérisé par le fait qu'il est prévu un second étage de décodage (DEC-SZ) qui, du côté entrée et du point de vue des signaux de cadence (TREZ1, 2, 3 . . .) du compteur de cadence (TREZ), est monté en parallèle par rapport au premier étage de décodage (DEC-NZ), et qui, en fonction d'une signalisation d'état (ZM), est susceptible d'être branché dans la voie des signaux, à la place du premier étage de décodage (DEC-NZ), et que les entrées de libération (CE) des deux étages de décodage sont reliées aux sorties complémentaires (TREADR) d'un multivibrateur bistabile (FF) qui commande le genre de fonctionnement (état normal NZ, état particulier SZ) d'un processeur qui traite les instructions.

# FIG 1

FIG 2

FIG 3